# EUROPEAN PATENT APPLICATION

(11) **EP 4 167 255 A1**
(43) Date of publication of application: **19.04.2023**
(21) Application number: 21382925.2
(22) Date of filing: 14.10.2021
(51) Int. Cl.: H01F 5/02, H01F 27/32, H01F 27/22, H01F 27/02, H01F 27/40

(54) **THERMAL CONDUCTIVE BOBBIN FOR A MAGNETIC POWER UNIT**

(71) Applicant: Premo, S.A., 29590 Campanillas Málaga (ES)
(72) Inventor: NAVARRO PÉREZ, Francisco Ezequiel, 08006 Barcelona (ES); CAÑETE CABEZA, Claudio, 29631 Benalmádena (ES); ROJAS CUEVAS, Antonio, 29190 Málaga (ES); RODRÍGUEZ MUNÍN, Raquel, 29680 Estepona (MALAGA) (ES); ARIZA BAQUERO, Miguel Ángel, 29002 Málaga (ES); BLANCO ORTIZ, Juan, 29680 Estepona (ES); RODRÍGUEZ GONZÁLEZ, Pablo, 29010 Málaga (ES)
(74) Representative: Juncosa Miró, Jaime

(57) **Abstract**

Thermal conductive bobbin, for a magnetic power unit, made of an injectable and polymerizable thermoplastic composition comprising a plastic polymer in an amount of between 5% and 15% by weight with respect to the total weight of the composition, an aluminium nanoparticles dispersion in mineral oil in an amount of between 25% and 55% by weight with respect to the total weight of the composition, silicon carbide microparticles between 20% and 45% by weight with respect to the total weight of the composition; and additives up to 10% by weight with respect to the total weight of the composition, and wherein the thermal conductive bobbin has a dielectric rigidity higher than 5kV/mm.

## Description

### Technical field

The present invention is in the field of inductive coiled components for magnetic power units and mainly relates to a bobbin that is chiefly thermal conductive and at the same time has a high dielectric rigidity, i.e., high electrical resistivity.

The invention also concerns to an inductive unit including a magnetic core and a bobbin, as well as to an inductive assembly in particular in the form of a transformer comprising several inductive units encased in a thermally conductive one-piece in the form of a moulded case.

### State of the Art

US6143819A discloses a composite sheet which is excellent in thermal conductivity, heat resistance, electrical characteristics, chemical resistance, mechanical characteristics and the like, the composite sheet comprising a fibrous organic compound, an inorganic filler, and a matrix resin wherein the fibrous organic compound comprising an aramid fiber, and said organic filler has a thermal conductivity at 20°C of 1 W/mK or more so that it is useful as an electrical insulation material in areas of rotary machines and transformers.

EP1772877B1 (ES2337279T3) relates to a MF transformer with improved heat dissipation and discloses an inductive component, for example a transformer or a choke, but in particular a medium-frequency transformer (MF transformers) with galvanic isolation, such as the ones that are used, for example, for applications in the field of rail transport technology and industry.

EP3796342A1 (owned by Premo) discloses a transformer assembly including several magnetic units arranged inside several corresponding cavities of a metallic box. The metallic box, which may be made of any of aluminium, an aluminium alloy, or a magnesium alloy, comprises metallic thermo-conductive walls for enclosing/delimiting each magnetic core and corresponding first and second coils and a cover. The material of the metallic box has a thermal conductivity above 70 W/mK and the transformer assembly also includes a stopper which in this embodiment is an encapsulated electrical terminal that allows the connection of the primary/secondary windings of the magnetic unit within limits of the creepage/clearance electrical isolation. This is important in avoiding dependence on the electrical insulation of the thermal conductive compound that fills the gaps in areas with a short creepage/clearance distance. In addition, the stopper also contributes to securely hold the magnetic cores inside each of the cavities of the metallic.

The metallic box of EP3796342A1 is custom designed with a base including one or more openings adjusted to the tolerance of the winding area. These openings allow that when the magnetic core is installed attached to a liquid cooling dissipation plate, the distance from the winding to the cooling aluminium is minimal, allowing an optimal heat to transfer due to a reduction of the heat transfer circuit to its minimum expression of thicknesses and materials. Thus, the losses generated in the copper (windings) are therefore eliminated in a shorter space of time and in the most efficient way possible. Likewise, the metallic box is designed with a specifically adjusted inner raised support to accommodate a homogeneous surface of the magnetic cores This inner support is in direct contact with the magnetic core(s) allowing maximum heat dissipation generated by power losses in the core(s). The heat is transferred directly from the magnetic material to the metallic box, and the latter then to the liquid cooling plate. The metallic box further includes also mounting holes to attach the metallic box to an installation point

This inner support installation point.is in direct contact with the magnetic core(s). This allows maximum heat dissipation generated by power losses in the core(s). The heat is transferred directly from the magnetic material to the metallic box, and the latter then to the liquid cooling plate.

Moreover, the magnetic cores of the magnetic units of the EP3796342A1 are arranged in the different cavities of the metallic box with a central part thereof at a same level, i.e., in a horizontal position, such that an isothermal gradient of temperature under working operation of the power transformer assembly is achieved.

In addition to the above, multiplying the switching frequency by five increases the losses of each cycle and therefore the heat to be dissipated. An optimised design like this allows for lower losses per cycle but also for rapid heat dissipation to keep the temperature below breakdown risk levels (<180°C).

EP2188200 (owned by Premo) patent application also discloses a power transformer assembly comprising several magnetic units each of them with magnetic cores and wound coils arranged inside one or more cavities of a metallic box and delimited by metallic thermal conductive walls of Sintered Spark Plasma (SPS), nanographite and a cover. CN111161940A [Egston] refers to a multi-phase transformer, including a housing and an inductive transformer unit, the inductive transformer unit including a magnet assembly, a primary coil, a secondary coil, and an inductive coil. At least three placement spaces are formed in the housing, and the housing includes a barrier wall that blocks between two adjacent placement spaces, and each of the placement spaces is provided with one inductive transformer unit.

However, the vast majority of thermally conductive plastic materials incorporate charges that are electroconductive and therefore induce eddy current losses when in the presence of a magnetic field. Therefore, very few high frequencies power transformers are capable of operating with thermally conductive bobbins. Most of these thermally conductive injectable materials currently known in the market such as Celanese's CoolPoly or Lord's or Lati's incorporate graphite (very electrically conductive). To ensure that they are not electrically conductive, they use Al₂ O₂ alumina nanospheres, a high purity and conductive ceramic that is electro-insulating. This makes the material very complex and expensive and presents rheology problems when injected.

Therefore, despite the developments described in the above-mentioned background in the referred technical field of power units, there is still a need of alternative improvements to further enhance the thermal dissipation of a magnetic power unit without increasing its size and costs, and to this end the present invention proposes that the bobbin/s i.e., a coil former housing the windings should also contribute significantly to such thermal dissipation.

For this purpose, it is proposed to manufacture the bobbins in a plastic material obtained from a polymerized composition in which a mixture of insulated metallic charges and semiconducting SiC fillers is used.

### Brief description of the invention

To achieve the aforementioned objective of increasing the thermal dissipation in a magnetic power unit beyond the results of the above-mentioned background, and with a contained costs this invention proposes to use, for each electromagnetic component, a bobbin which is highly electrothermally conductive and, on the other hand, present a very high electrical insulation.

This invention provides a thermal conductive bobbin for a magnetic power unit, the bobbin being made of an injectable thermoplastic composition, which has been injected in a mould and polymerized, the injectable thermoplastic composition comprising:
a plastic polymer in an amount of between 5% and 15% by weight with respect to the total weight of the injectable thermoplastic composition;
an aluminium nanoparticles dispersion in mineral oil in an amount of between 25% and 55% by weight with respect to the total weight of the composition;
silicon carbide microparticles between 20% and 45% by weight with respect to the total weight of the composition; and
additives up to 10% by weight with respect to the total weight of the composition,

The thermal conductive bobbin is obtained by polymerization and reticulation of the injectable thermoplastic composition and has a dielectric rigidity higher than 5kV/mm.

To implement an electromagnetic component, as well known in the art, a magnetic field generated with or without a magnetic core is closed around said thermal conductive bobbin.

According to the principles of this invention the referred plastic polymer is selected from the group comprising polybutylene terephthalate, polycaprolactam, poly(hexamethylene adipamide), polyethylene terephthalate, polyether ether ketone and polyimide and the additives are dispersants, lubricants (such as silicon oil), flame retardants (for example Aluminium Hydroxide) or combinations thereof.

According to a preferred embodiment the dispersant is a condensation product of polyethyleneimine and polycarbonylalkylenoxy (known as SOLPERSE).

In an embodiment the Aluminium nanoparticles have a D50 equal to or lower than 100 nm, while the Silicon carbide microparticles have a D50 equal to or lower than 10 µm.

Tests conducted on the referred injectable composition once polymerized and cross-linked configured in the form of a bobbin have shown that it exhibits an electrical resistivity higher than 10 KΩ/mm and a thermal conductivity higher than 1,8W/mK.

The material of the thermal conductive bobbin here disclosed supports a high resistance to the induction of currents by magnetic field due to the high resistivity that its charges are isolated from each other by inorganic steric dispersants, by the polymeric matrix and mineral oils. The invention also refers to an inductive unit including at least a magnetic core and a bobbin and to an inductive assembly in the form of a transformer including several inductive units preferably operating under a switching frequency of at least 400 KHz.

In an embodiment of such an inductive assembly the several inductive units are encased in a one-piece, thermally conductive made of pure aluminium in the form of an injection moulded case with vertical walls delimiting a number of housings each of them seized to contain at least one inductive unit. The injection moulded case is filled with polyimide insulants of thermal conductivity higher than 0,8W/mk.

It will be understood that references to geometric position, such as parallel, perpendicular, tangent, etc. allow deviations up to ± 5° from the theoretical position defined by this nomenclature.

It will also be understood that any range of values given may not be optimal in extreme values and may require adaptations of the invention to these extreme values are applicable, such adaptations being within reach of a skilled person.

Other features of the invention appear from the following detailed description of an embodiment.

### Brief description of the Figures

The foregoing and other advantages and features will be more fully understood from the following detailed description of an embodiment with reference to the accompanying drawings, to be taken in an illustrative and non-limitative manner, in which:
Figure 1 is an exploded perspective view of an inductive assembly including specifically two transformers and two chokes stored in a case defining two housings sealed by a thermal conductive resin and with an aluminium top cover.
Figure 2 shows in a similar view another embodiment of an inductive assembly implementing the teaching of this invention.
Fig. 3 illustrates another embodiment of the invention in which the case includes three housings for a corresponding pair of transformers with a series resonant inductor as used in LLC technologies built using the explained bobbins.

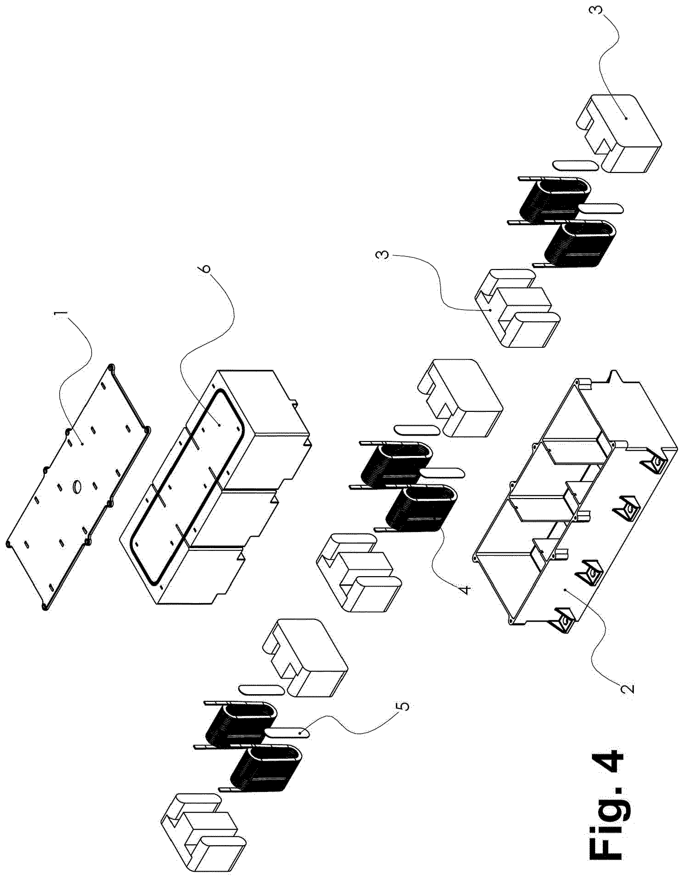

Fig. 4 shows in perspective and in an exploded view another embodiment of the invention.

### Detailed description of some embodiments

As previously explained this invention proposes a thermoplastic material, injectable with glass transition temperatures above 200°C, based on 10 - 12% of polymer type PBT, PA6 PA66 , PET, RPET, Peek or Poly-imide, a load of nanoparticles (<100nm) of Alumina isolated in mineral oil between 30-50% by weight, Silicon Carbide (SiC) microparticles (<10um) charge (25-40% by weight), and other steric dispersant additives, flame retardants, glass fiber charge, fluidizing agents, lubricants and colorants up to a maximum of 7% by weight. The material presents a high thermal conductivity superior to 1.8W/°km, a high electrical resistivity (superior to 10KOHM/mm).

The previous thermoplastic material withstands a high resistance to the induction of currents by magnetic field due to the high resistivity that its charges incorporate thanks to being isolated among themselves by organic steric dispersants, by the polymeric matrix and mineral oils.

The invention is particularly suitable for any bobbin (coil former) injected with this material to house a winding of conducting wire and on which a magnetic field with or without core is closed.

Any inductor or transformer can be made with this reel incorporating this material and especially those with a higher switching frequency such as those used in SiC switched systems at 400KHz or higher as they require high thermal conductivity and high resistance to induction Eddy current losses.

The embodiments illustrated in the drawings show a transformer assembly with its resonant series inductor as used in LLC technologies built with these reels and materials. The cited transformer assembly exhibits a high-performance thermal bridge, elastic to avoid magnetostriction, with high thermal diffusivity and with thermal conductivity of at least 2 W/km based on a base of silicone polymers and natural fillers, especially with a third filler as claimed in EP3796342A1 (owned by PREMO).

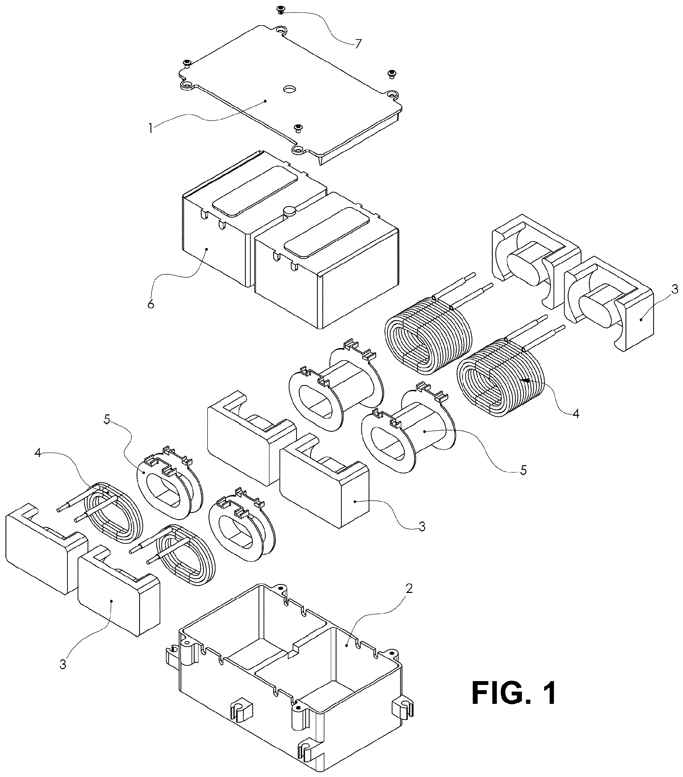

Fig. 1 shows the different components of a transformer assembly according to the invention were the several inductive units are encased in a one-piece, thermally conductive made of pure aluminium, in the form of an injection moulded case 2 with vertical walls delimiting a number of housings each of them seized to contain at least one inductive unit.

Each inductive unit comprises a magnetic core which in this example is formed by two ferrite E-shaped con-figuration half-pieces 3 whose central branch is surrounded by a bobbin 5 configured in a material obtained by polymerization and cross-linking of a composition as previously detailed. In the illustrated embodiment a winding 4 is wound in the bobbin 5. Each transformer has associated aligned a choke with a bobbin 5, winding 4 and magnetic core 3. The case is filled with polyimide insulants 6 of thermal conductivity higher than 0,8W/mk. A top cover or lid 1 fixed by screws 7 closes the aluminium case 2.

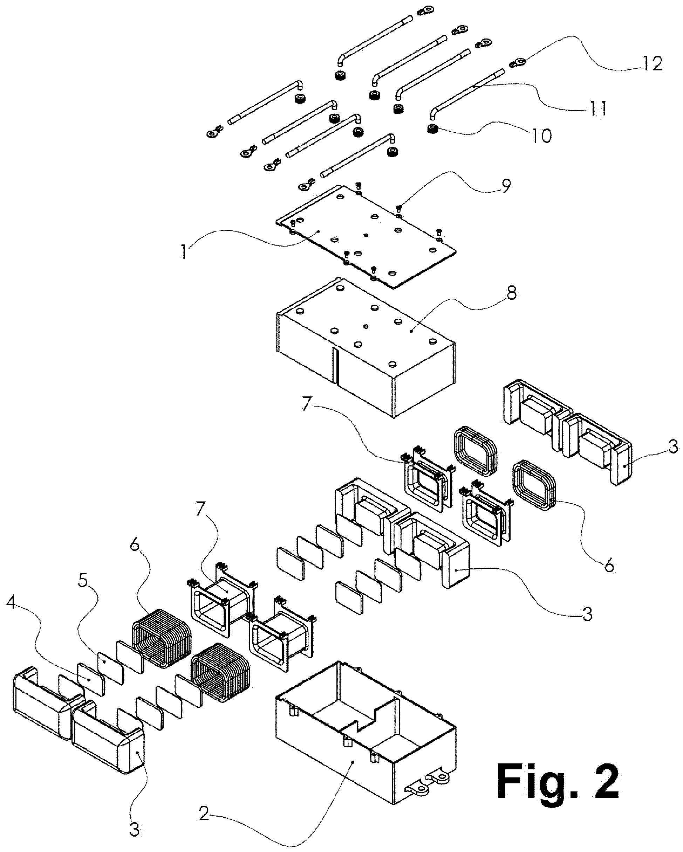

Fig. 2 illustrates another embodiment of the invention where the ferrite core 3 of each of the transformer units as well as the bobbin 5 and windings 6 has a different shape. Plastic spacers 5 are used in the transformer units and the choke comprises a ferrite core bobbin 7 and winding 6. The case is filled with a thermal conductive resin 8 and silicone tube 11connect terminals with each transformer unit through gromets 10.

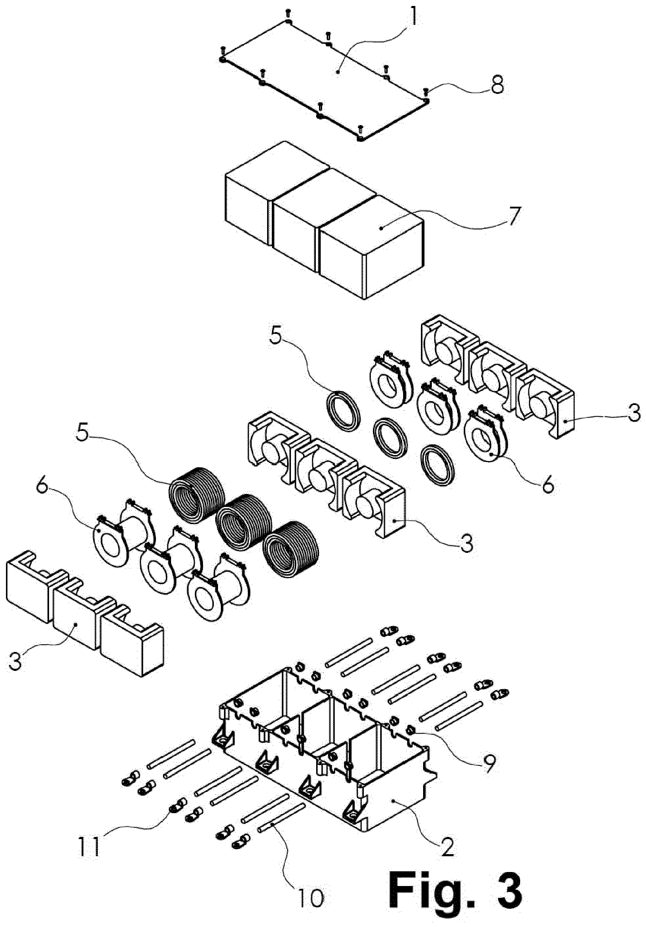

Fig. 3 shows another embodiment where the case includes three housing for a corresponding power unit including a transformer and a choke.

Moreover, the disclosed power assemblies are specially designed to work with LLC converters based on Silicon Carbide semiconductors, this allowing the system to switch at higher frequencies (200 KHz to 800KHz) in this case 200KHz to 300KHz and at higher voltages than Silicon Mosfets transistors (20KHz to 150KHz typo).

## Claims

1. Thermal conductive bobbin for a magnetic power unit, wherein the thermal conductive bobbin has a magnetic field closed around, generated with or without a core, and the thermal conductive bobbin is made of an injectable and polymerizable thermoplastic composition comprising:
a plastic polymer in an amount of between 5% and 15% by weight with respect to the total weight of the composition;
an aluminium nanoparticles dispersion in mineral oil in an amount of between 25% and 55% by weight with respect to the total weight of the composition;
silicon carbide microparticles between 20% and 45% by weight with respect to the total weight of the composition; and
additives up to 10% by weight with respect to the total weight of the composition,
wherein the thermal conductive bobbin has a dielectric rigidity higher than 5kV/mm.

2. The thermal conductive bobbin according to claim 1, wherein the plastic polymer is selected from the group comprising polybutylene terephthalate, polycaprolactam, poly(hexamethylene adipamide), polyethylene terephthalate, polyether ether ketone and polyimide.

3. The thermal conductive bobbin according to any one of the claims 1 to 3, wherein the additives are dispersants, lubricants, flame retardants or combinations thereof.

4. The thermal conductive bobbin according to claim 3, wherein the dispersant is a condensation product of polyethyleneimine and polycarbonylalkylenoxy.

5. The thermal conductive bobbin according to claim 3 or 4, wherein the lubricant is silicon oil.

6. The thermal conductive bobbin according to claims 3, 4 or 5, wherein the flame retardant is Aluminium Hydroxide.

7. The thermal conductive bobbin according to any of the preceding claims 1 to 6, wherein the aluminium nanoparticles have a D50 equal to or lower than 100 nm.

8. The thermal conductive bobbin according to any of the preceding claims 1 to 7, wherein the silicon carbide microparticles have a D50 equal to or lower than 10 µm.

9. The thermal conductive bobbin according to any of the preceding claims 1 to 8, wherein the thermal conductive bobbin has an electrical resistivity higher than 10 KΩ/mm.

10. The thermal conductive bobbin according to any of the preceding claims 1 to 9, wherein the thermal conductive bobbin has a thermal conductivity higher than 1,8W/mK.

11. An inductive unit including a bobbin, according to any of the claims 1 to 10, with at least one magnetic core.

12. An inductive assembly including several inductive units, each inductive unit including a bobbin, according to any of the preceding claims 1 to 10, with at least one magnetic core, the inductive assembly constituting a transformer.

13. The inductive assembly according to claim 12 wherein the inductive assembly is configured to operate under a switching frequency of at least 400 KHz.

14. The inductive assembly according to claim 12 or 13 wherein the several inductive units are encased in a one-piece thermally conductive case made of aluminium with a number of housings, each housing containing at least one inductive unit.

15. The inductive assembly according to claim 14, wherein the case is filled with polyimide insulants having a thermal conductivity higher than 0,8W/mk.
